# EUROPEAN PATENT APPLICATION

(11) **EP 2 848 671 A1**
(43) Date of publication of application: **18.03.2015**
(21) Application number: 12876231.7
(22) Date of filing: 08.05.2012
(51) Int. Cl.: C09K 11/59

(54) **METAL NANOPARTICLE-COATING SILICATE LUMINESCENT MATERIAL AND PREPARATION METHOD THEREFOR**

(71) Applicant: Shenzhen Ocean's King Lighting Engineering Co. Ltd., Guangdong 518054 (CN); Shen Zhen Ocean's King Lighting Engineering Co. Ltd, Shenzhen, Guangdong 518054 (CN)
(72) Inventor: ZHOU, Mingjie, Shenzhen Guangdong 518054 (CN); WANG, Rong, Shenzhen Guangdong 518054 (CN); CHEN, Guitang, Shenzhen Guangdong 518054 (CN)
(74) Representative: Schrell, Andreas
(86) International application number: PCT/CN2012/075207
(87) International publication number: WO 2013/166663

(57) **Abstract**

Disclosed is a metal nanoparticle-coating silicate luminescent material, which has a molecular formula of Li₂Ca₁₋ₓSiO₄:Tbₓ@*M_{y}*; where @ represents a coating, *M* is at least one among Ag, Au, Pt, Pd, and Cu nanoparticles, where 0<x≤0.2, where y is the molar ratio between M and Si, and where 0<y≤1× 10⁻². The composition of the metal nanoparticle-coating silicate luminescent material is metal nanoparticles coated with Li₂Ca₁₋ₓSiO₄:Tbₓ, all of which are substances having great chemical stability and having great stability when bombarded by large electron beams. Also provided in the present invention is a method for preparing the metal nanoparticle coating silicate luminescent material.

## Description

### TECHNICAL FIELD

The present invention relates to the field of luminescent material, in particular to a metal nanoparticle-coating silicate luminescent material and preparation method therefor.

### BACKGROUND ART

1960s, Ken Shoulder proposed the idea of the field emission cathode arrays (FEAs)-based electron beam micro-device, so study of the manufacture of flat panel displays and light source device utilizing the design of FEAs has aroused great interest in the public. The working principle of this brand new field emission device is similar to that of the conventional cathode ray tube (CRT), in which imaging or illuminating are achieved by the luminescent effect caused by bombardment of electron beam onto the red, green and blue-phosphor, such devices have potential advantages in terms of their brightness, viewing angle, response time, range of working temperature and power consumption etc.

One of the key factors in the preparation of high-performance field emission device is the production of a high-performance phosphor body. Fluorescent materials being commonly employed by traditional field emission devices are mainly those sulfide-based and sulfur oxide-based phosphor for the traditional cathode-ray tube and projection television display tube.

As to the sulfide-based and sulfur oxide-based phosphor, which exhibits relatively high luminance, and has a certain level of conductivity, but prone to decomposition when bombarded by a large electron beam, which results in the release of elemental sulfur that "poisons" the cathode tip, and generation of additional deposition covering the surface of the phosphor, which reduces the luminous efficiency of the phosphor, and hence the service life of the field emission device is reduced.

### DISCLOSURE OF THE INVENTION

On this basis, for the unstable problem of the traditional sulfide-based and sulfur oxide-based phosphor when bombarded by large electron beams, it is necessary to provide a metal nanoparticle-coating silicate luminescent material having greater stability when bombarded by large electron beams, and also a preparation method thereof.

A metal nanoparticle-coating silicate luminescent material having the molecular formula of: Li₃Ca₁₋ₓSiO₄:Tbₓ@M_{y};

where, @ represents a coating, M is at least one among Ag, Au, Pt, Pd, and Cu nanoparticles, 0<x≤0.2, y is the molar ratio between M and Si, and 0<y≤1×10⁻².

A method of preparing a metal nanoparticle-coating silicate luminescent material, comprising the steps of:

preparing a colloid containing a metal nanoparticle, said metal is at least one among Ag, Au, Pt, Pd, and Cu;

surface processing said colloid containing a metal nanoparticle, then adding anhydrous ethanol, deionized water and ammonia, when mixed evenly and while stirring, adding tetraethylorthosilicate on the basis of the molar ratio, y, of the metal nanoparticle and Si, when reacted acquiring by separation of the metal nanoparticle-coating SiO₂, where 0 < y≤1×10⁻²;

weighing, on the basis of the stoichiometric ratio, of the compounds corresponding to Li, Ca and Tb, and of the metal nanoparticle-coating SiO₂, thermal processing when mixed evenly, and subjecting the same to thermal reduction in a reducing atmosphere, acquiring Li₂Ca₁₋ₓSiO₄:Tbₓ@M_{y} when cooled; where @ represents a coating, M is at least one among Ag, Au, Pt, Pd, and Cu nanoparticles, and 0 < x≤0.2.

In one embodiment, said step of preparing said colloid containing a metal nanoparticle comprises:

mixing a solution of a metal salt, an auxiliary agent and a reducing agent for a reaction time of 10 min to 45 min, and affording a colloid containing a metal nanoparticle after the reaction, said metal is at least one among Ag, Au, Pt, Pd, and Cu.

In one embodiment, the concentration of said solution of a metal salt is 1×10⁻³mol/L to 5×10⁻²mol/L;

said auxiliary agent is at least one among polyvinyl pyrrolidone, sodium citrate, cetyl trimethyl ammonium bromide, sodium lauryl sulfate and sodium dodecyl sulfate;

said auxiliary agent is present in said colloid containing a metal nanoparticle in an amount of 1×10⁻⁴g/mL to 5×10⁻²g/mL;

said reducing agent is at least one among hydrazine hydrate, ascorbic acid, sodium citrate and sodium borohydride;

the molar ratio of said reducing agent and the metal ion in said solution of a metal salt is 3.6: 1 to 18: 1.

In one embodiment, said step of surface processing said colloid containing a metal nanoparticle comprises adding said colloid containing a metal nanoparticle into a solution of polyvinylpyrrolidone while being stirred for 8h to 18h.

In one embodiment, the concentration of said solution of polyvinylpyrrolidone is 0.005g/mL to 0.1g/mL.

In one embodiment, said water, anhydrous ethanol, ammonia and tetraethylorthosilicate are mixed by volume fraction of 10∼20: 15∼50: 1∼7: 0.5∼3.

In one embodiment, said compounds corresponding to Li, Ca and Tb are oxides, carbonates, acetates or oxalates corresponding to Li, Ca and Tb.

In one embodiment, said thermal processing comprises calcining at 500 °C to 1000 °C for 2h to 5h.

In one embodiment, said step of thermal processing in a reducing atmosphere comprises conducting reduction at 800 °C to 1200°C in a reducing atmosphere for 0.5h to 6h;

said reducing atmosphere is at least one among N₂ and H₂ reducing atmosphere, carbon powder reducing atmosphere, CO reducing atmosphere and pure H₂ reducing atmosphere.

The composition of the metal nanoparticle-coating silicate luminescent material is metal nanoparticles coated with Li₂Ca₁₋ₓSiO₄:Tbₓ, all of which are substances having good chemical stability and having good stability when bombarded by large electron beams.

### BRIEF DESCRIPTION OF THE DRAWING

Figure 1 shows a flowchart of the process of preparing the metal nanoparticle-coating silicate luminescent material of one embodiment.
Figure 2 shows a comparative plot of the luminescent spectrum of the metal nanoparticle-coating silicate luminescent material prepared in Example 3 and that of the traditional luminescent material having the formula of Li₂Ca_{0.90}SiO₄:Tb_{0.10} without being doped with metal nanoparticles, being excited with a cathode ray at an accelerating voltage of 1.5 kV

### DETAILED DESCRIPTION OF THE EMBODIMENTS

To facilitate the understanding of the present invention, the present invention will be described in further details accompanying the drawings. The drawings give the preferable embodiment of the present invention. However, it should be understood that the detailed description of the embodiment is merely illustrative of the invention and is not to be construed a limiting the invention. The present invention can be achieved in many different ways.

A metal nanoparticle-coating silicate luminescent material of one embodiment having the molecular formula of: Li₂Ca₁₋ₓSiO₄:Tbₓ@M_{y},

where, @ represents a coating, M is at least one among Ag, Au, Pt, Pd, and Cu nanoparticles, 0<x≤0.2, y is the molar ratio between M and Si, and 0<y≤1×10⁻².

Coating is comprised of a core of a metal-coated nanoparticle and a shell of Li₂Ca₁₋ₓSiO₄:Tbₓ phosphor.

The composition of such metal nanoparticle-coating silicate luminescent material is metal nanoparticles coated with Li₂Ca₁₋ₓSiO₄:Tbₓ, all of which are substances having good chemical stability and having good stability when bombarded by large electron beams.

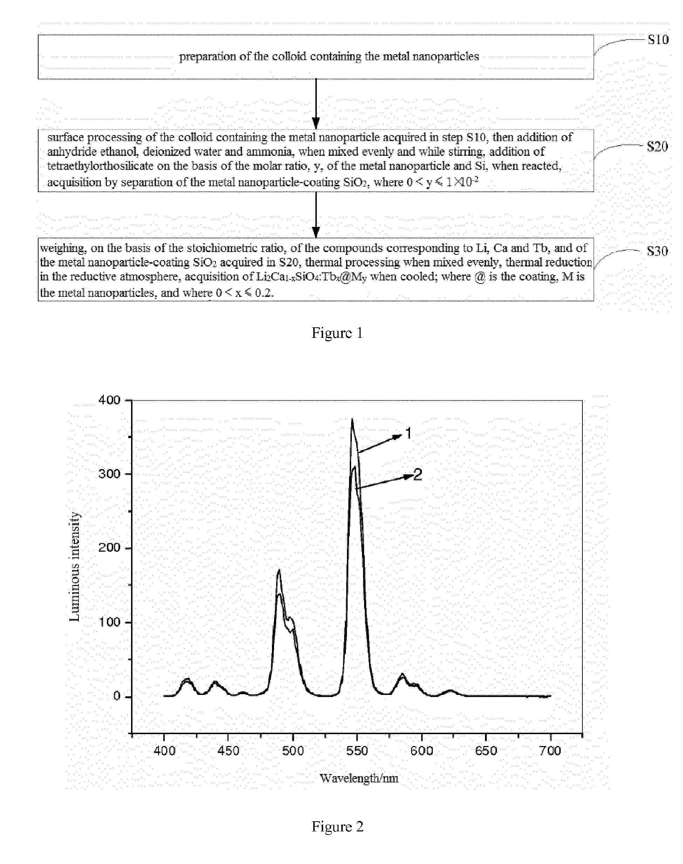

As depicted in figure 1, a method of preparing a metal nanoparticle-coating silicate luminescent material comprises the steps of:

S10: preparation of a colloid containing a metal nanoparticle.

Mixing a solution of a metal salt, an auxiliary agent and a reducing agent for a reaction time of 10 min to 45 min, and affording a colloid containing a metal nanoparticle after the reaction, said metal may be at least one among Ag, Au, Pt, Pd, and Cu.

A solution of a metal salt may be any soluble salts, for example, nitrate, hydrochloride, sulfate and the like. In the case of Ag and Pt, chloroauric acid (AuCl₃·HCl₃·4H₂O) and chloroplatinic acid (H₂PtCl₆·6H₂O) may be used.

The concentration of said solution of a metal salt is 1×10⁻³mol/L to 5×10⁻²mol/L.

An auxiliary agent may be at least one among polyvinyl pyrrolidone, sodium citrate, cetyl trimethyl ammonium bromide, sodium lauryl sulfate and sodium dodecyl sulfate. The addition amount of an auxiliary agent in the resulting colloid containing a metal nanoparticle is 1×10⁻⁴g/mL to 5×10⁻²g/mL.

A reducing agent may be at least one among hydrazine hydrate, ascorbic acid, sodium citrate and sodium borohydride. A reducing agent is generally mixed with a solution of a metal salt after being formulated into a solution. A reducing agent may be formulated into or diluted to an aqueous solution having a concentration of 1×10⁻⁴mol/L to 1mol/L. The molar ratio of the addition amount of a reducing agent and the metal ion in said solution of a metal salt is 3.6: 1 to 18: 1.

On the premise that a colloid containing a metal nanoparticle is acquired, to save energy, the reaction time of this step may be 10min to 45min.

S20: surface processing the colloid containing a metal nanoparticle acquired from step S10, then adding anhydrous ethanol, deionized water and ammonia, when mixed evenly and while stirring, adding tetraethylorthosilicate on the basis of the molar ratio, y, of the metal nanoparticle and Si, when reacted acquiring by separation of the metal nanoparticle-coating SiO₂, where 0 < y≤1×10⁻².

The step of surface processing said colloid containing a metal nanoparticle comprises adding said colloid containing a metal nanoparticle into a solution of polyvinylpyrrolidone (PVP) while being stirred for 8h to 18h by magnetic stirring to complete the surface processing. The concentration of said solution of polyvinylpyrrolidone is 0.005g/mL to 0.1g/mL.

For better formation of SiO₂ microspheres, water, anhydrous ethanol, ammonia and tetraethylorthosilicate are mixed by volume fraction of 10∼20: 15∼50: 1∼7: 0.5∼3.

For convenience, the metal nanoparticles coated with SiO₂ may be referred to as SiO₂@M_{y}.

The operation of isolating the metal nanoparticles coated with SiO₂ may be achieved by centrifugation, washing, and drying to obtain the metal nanoparticles coated with SiO₂ powder.

S30: weighing, on the basis of the stoichiometric ratio, of the compounds corresponding to Li, Ca and Tb, and of the metal nanoparticle-coating SiO₂, thermal processing when mixed evenly, and subjecting the same to thermal reduction in a reducing atmosphere, acquiring Li₂Ca₁₋ₓSiO₄:Tbₓ@M_{y} when cooled; where @ represents a coating, M is a metal nanoparticle, 0 < x≤0.2.

Compounds corresponding to Li, Ca and Tb may be oxides, carbonates, acetates or oxalates.

The weighed compounds corresponding to Li, Ca and Tb and the thus acquired metal nanoparticle-coating SiO₂ from S20 may be grinded to mix homogenously.

Said thermal processing may be conducted by calcining in a muffle furnace at 500°C to 1000°C for 2h to 5h.

Said thermal reduction may be conducted by reducing at 800°C to 1200 °C in a reducing atmosphere for 0.5h to 6h.

Said reducing atmosphere may be at least one among N₂ and H₂ reducing atmosphere, carbon powder reducing atmosphere, CO reducing atmosphere and pure H₂ reducing atmosphere.

SiO₂@M is prepared by sol-gel method, which SiO₂@M being used as the silicon source is then used together with said compounds corresponding to Li, Ca and Tb to prepare the metal nanoparticle-coating lithium calcium silicate phosphor, namely Li₃Ca₁₋ₓSiO₄:Tbₓ@M_{y} by the high-temperature solid-phase method, by which the luminous intensity of the phosphor is enhanced.

Such metal nanoparticle-coating terbium-doped lithium silicate luminescent material prepared by such method of preparing the metal nanoparticle-coating silicate luminescent material has the advantages of good stability, better luminous performance, which can be widely used in the field of lighting and display.

The specific embodiment of the present invention will now be given as follows:

### Example 1

### Preparation of Li₂Ca_{0.85}SiO₄:Tb_{0.15}@Au_{1×10}⁻₂

Preparation of the colloid containing the Au nanoparticle: 20.6mg of chloroauric acid (AuCl₃·HCl·4H₂O) was weighed and dissolved in 16.8mL of deionized water. After complete dissolution of chloroauric acid, 14 mg of sodium citrate and 6 mg of cetyl trimethyl ammonium bromide were weighed, and dissolved in an aqueous solution of chloroauric acid under magnetic stirring. 1.9mg of sodium borohydride and 17.6mg of ascorbic acid were, respectively, dissolved in 10mL of deionized water to give 10 mL of an aqueous solution of sodium borohydride having a concentration of 5×10⁻³mol/L and 10mL of an aqueous solution of ascorbic acid having a concentration of 1×10⁻²mol/L. Under magnetic stirring, 0.08mL of the aqueous solution of sodium borohydride was firstly added into the aqueous solution of chloroauric acid, followed by addition of 3.12mL of the aqueous solution of ascorbic acid (1×10⁻²mol/L) into the aqueous solution of chloroauric acid after being reacted while stirring for 5min, and the same was reacted for further 30min to give 20mL of a colloid containing Au nanoparticles having the Au content of 5×10⁻³mol/L.

Preparation of SiO₂@Au_{1×10}-₂: 10mL of a colloid containing Au nanoparticles having a concentration of 5×10⁻³mol/L was weighed. Into a beaker containing the colloid containing Au nanoparticles was added 2mL of PVP solution (0.1g/mL), and the same was magnetically stirred for 8h to give surfaced-processed Au nanoparticles. Into said colloid containing Au nanoparticles was added sequentially 25 mL of anhydrous ethanol, 5mL of ammonia, 1.2mL of tetraethylorthosilicate under stirring, and the same was reacted for 8h, subjected to centrifugation, washing, drying to give SiO₂@Au_{1×10}-₂ powder.

Preparation of Li₂Ca_{0.85}SiO₄Tb_{0.15}@Au_{1×10}-₂: 0.1195g of Li₂O, 0.1904g of CaO, 0.1121g of Tb₄O₇ and 0.2404g of SiO₂@Au powder were weighed and grinded sufficiently in an agate mortar to give a homogenous mixing, and the powder was then transferred into a corundum crucible, and subjected to thermal processing in a muffle furnace at 500 °C for 15h, and sintered in a tubular furnace at 1000 °C in a carbon powder reducing atmosphere for 2h to undergo reduction, cooled to room temperature to afford Li₂Ca_{0.85}SiO₄:Tb_{0.15}@Au_{1×10}-₂ luminescent material.

### Example 2

### Preparation of Li₂Ca_{0.98}SiO₄:Tb_{0.02}@Pt_{5×10}-₃.

Preparation of the colloid containing the Pt nanoparticle: 25.9mg of chloroplatinic acid (H₂PtCl₆·6H₂O) was weighed and dissolved in 17 mL of deionized water. After complete dissolution of chloroplatinic acid, 40.0mg of sodium citrate and 60.0mg of sodium dodecylsulphate were weighed, and dissolved in an aqueous solution of chloroplatinic acid under magnetic stirring. 1.9mg of sodium borohydride was dissolved in 10mL of deionized water to give 10 mL of an aqueous solution of sodium borohydride having a concentration of 5×10⁻³mol/L, and 10 mL of a solution of hydrazine hydrate having a concentration of 5×10⁻²mol/L was prepared. Under magnetic stirring, 0.4 mL of the aqueous solution of sodium borohydride was firstly added dropwisely into the aqueous solution of chloroplatinic acid, followed by dropwise addition of 2.6 mL of the solution of hydrazine hydrate (5×10⁻²mol/L) into the aqueous solution of chloroplatinic acid after being reacted while stirring for 5min, and the same was reacted for further 40min, to give 10mL of a colloid containing Ptnanoparticles having the Pt content of 2.5×10⁻³mol/L.

Preparation of SiO₂@ Pt_{5×10}-_{3c}: 8 mL of a colloid containing Pt nanoparticles (2.5×10⁻³mol/L) was weighed. Into a beaker containing the colloid containing Pt nanoparticles was added 4mL of PVP solution (0.02g/mL), and the same was magnetically stirred for 18h, to give surfaced-processed Pt nanoparticles. Into said colloid containing Pt nanoparticles was added sequentially 20 mL of anhydrous ethanol, 4mL of ammonia, 1 mL of tetraethylorthosilicate under stirring, and the same was reacted for 3h, subjected to centrifugation, washing, drying to give SiO₂@Pt_{5×10}-₃ powder.

Preparation of Li₂Ca_{0.98}SiO₄:Tb_{0.02}@Pt_{5×10}-₃: 0.2955g of Li₂CO₃, 0.3924g of CaCO₃, 0.0199g of Tb₂(CO₃)₃ and 0.2404g of SiO₂@Au powder were weighed and grinded sufficiently in an agate mortar to give a homogenous mixing, and the powder was then transferred into a corundum crucible, and subjected to thermal processing in a muffle furnace at 1000 °C for 2h, and sintered in a tubular furnace at 1200°C in a CO reducing atmosphere for 0.5 h to undergo reduction, cooled to room temperature, to afford Li₂Ca_{0.98}SiO₄:Tb_{0.02}@Pt_{5×10}-₃ luminescent material.

### Example 3

### Preparation of Li₂Ca_{0.90}SiO₄:Tb_{0.10}@Ag_{2.5×10}-₄.

Preparation of the colloid containing the Ag nanoparticle: 3.4 mg of silver nitrate (AgNO₃) was weighed and dissolved in 18.4 mL of deionized water. After complete dissolution of silver nitrate, 42 mg of sodium citrate was weighed, and dissolved in an aqueous solution of silver nitrate under magnetic stirring. 5.7 mg of sodium borohydride was dissolved in 10mL of deionized water to give 10 mL of an aqueous solution of sodium borohydride having a concentration of 1.5×10⁻²mol/L. Under magnetic stirring, 1.6 mL of the aqueous solution of sodium borohydride (1.5×10⁻²mol/L) was added all at once into the aqueous solution of silver nitrate, and the same was reacted for further 10min, to give 20mL of a colloid containing Ag nanoparticles having the Ag content of 1×10⁻³mol/L.

Preparation of SiO₂@ Ag_{2.5×10}-₄: 1.2mL of a colloid containing Ag nanoparticles (1×10⁻³mol/L) was weighed. Into a beaker containing the colloid containing Ag nanoparticles was added 10 mL of PVP solution (0.01 g/mL), and the same was magnetically stirred for 12h, to give surfaced-processed Ag nanoparticles. Into said colloid containing Ag nanoparticles was added sequentially 30 mL of anhydrous ethanol, 7.2 mL of ammonia, 1.2 mL of tetraethylorthosilicate under stirring, and the same was reacted for 6h, subjected to centrifugation, washing, drying to give SiO₂@Ag_{2.5×10}-₄ powder.

Preparation of Li₂Ca_{0.90}SiO₄:Tb_{0.10}@Ag_{2.5×10}-₄: 0.2955g of Li₂CO₃, 0.2016g of CaO, 0.0747g of Tb₄O₇ and 0.2404g of SiO₂ of SiO₂@Au powder were weighed and grinded sufficiently in an agate mortar to give a homogenous mixing, and the powder was then transferred into a corundum crucible, and subjected to thermal processing in a muffle furnace at 600 °C for 4h, and sintered in a tubular furnace at 800°C in a 95% N₂ + 5%H₂ weak reducing atmosphere for 6h to undergo reduction, cooled to room temperature, to afford Li₂Ca_{0.90}SiO₄:Tb_{0.10}@ Ag_{2.5×10}-₄ luminescent material.

Figure 2 is a comparative plot of the luminescent spectrum of the Ag nanoparticle-coating Li₂Ca_{0.90}SiO₄:Tb_{0.10}@Ag_{2.5×10}-₄ luminescent material prepared in this Example and that of the traditional Li₂Ca_{0.90}SiO₄:Tb_{0.10} luminescent material without being doped with metal nanoparticles, being excited with a cathode ray at a voltage of 1.5 kV. Curve 1 is the luminescent spectrum of the Ag nanoparticle-doped Li₂Ca_{0.90}SiO₄:Tb_{0.10}@Ag_{2.5×10}-₄ luminescent material, while curve 2 is the luminescent spectrum of the Li₂Ca_{0.90}SiO₄:Tb_{0.10} luminescent material without being doped with metal nanoparticles. Figure 2 shows that the luminous intensity of the Ag nanoparticle-coating Li₂Ca_{0.90}SiO₄:Tb_{0.10}@Ag_{2.5×10}-₄ has an increasement of 20% as comparing with the commercial available Li₂Ca_{0.90}SiO₄:Tb_{0.10} luminescent material without being doped with metal nanoparticles at the emission peak of 544nm.

The luminescent material of the present Example has good stability, good color purity and higher luminous efficiency.

### Example 4

### Preparation of Li₂Ca_{0.80}SiO₄:Tb_{0.20}@Pd_{1×10}-₅.

Preparation of the colloid containing the Pd nanoparticle: 0.22 mg of palladium chloride (PdCl₂·2H₂O) was weighed and dissolved in 19 mL of deionized water. After complete dissolution of palladium chloride, 11.0 mg of sodium citrate and 4.0 mg of lauryl sodium sulfate were weighed, and dissolved in an aqueous solution of palladium chloride under magnetic stirring. 3.8 mg of sodium borohydride was dissolved in 10mL of deionized water to give a reducing solution of sodium borohydride having a concentration of 1×10⁻²mol/L; under magnetic stirring, 1 mL of the aqueous solution of sodium borohydride (1×10⁻²mol/L) was added rapidly into the aqueous solution of palladium chloride, and the same was reacted for further 20 min, to give 20mL of a colloid containing Pd nanoparticles having the Pd content of 5×10⁻⁵mol/L.

Preparation of SiO₂@ Pd_{1×10}-₅: 1.5mL of a colloid containing Pd nanoparticles (5×10⁻⁵mol/L) was weighed. Into a beaker containing the colloid containing Pd nanoparticles was added 8 mL of PVP solution (0.005g/mL), and the same was magnetically stirred for 16h, to give surfaced-processed Pd nanoparticles. Into said colloid containing Pd nanoparticles was added sequentially 40 mL of anhydrous ethanol, 8 mL of ammonia, 1.8 mL of tetraethylorthosilicate under stirring, and the same was reacted for 5h, subjected to centrifugation, washing, drying to give SiO₂@Pd_{1×10}-₅ powder.

Preparation of Li₂Ca_{0.80}SiO₄:Tb_{0.20}@Pd_{1×10}-₅: 0.4076g of Li₂C₂O₄, 0.4096g of CaC₂O₄, 0.2327g of Tb₂C₂O₄)₃ and 0.2404g of SiO₂ of SiO₂@Pd powder were weighed and grinded sufficiently in an agate mortar to give a homogenous mixing, and the powder was then transferred into a corundum crucible, and subjected to thermal processing in a muffle furnace at 700 °C for 5h, and sintered in a tubular furnace at 1000°C in a 95% N₂ + 5%H₂ weak reducing atmosphere for 6h to undergo reduction, cooled to room temperature, to afford Li₂Ca_{0.80}SiO₄:Tb_{0.20}@ Pd_{1×10}-₅ luminescent material.

### Example 5

### Preparation of Li₂Ca_{0.95}SiO₄:Tb_{0.05}@Cu_{1×10}-₄.

Preparation of the colloid containing the Cu nanoparticle: 1.6 mg of copper nitrate was weighed and dissolved in 16 mL of ethanol. After complete dissolution, 12 mg of PVP was added under stirring, followed by dropwisely added therein 4ml of an ethanol solution of sodium borohydride (1×10⁻³mol/L) obtained by dissolving 0.4 mg of sodium borohydride in 10 mL of ethanol, and the same was reacted for further 10 min, to give 20mL of a colloid containing Cu nanoparticles (4×10⁻⁴mol/L).

Preparation of SiO₂@Cu_{1×10}-₄: 1.5mL of a colloid containing Cu nanoparticles (4×10⁻⁴mol/L) was weighed. Into a beaker containing the colloid containing Cu nanoparticles was added 5 mL of PVP solution (0.03g/mL), and the same was magnetically stirred for 10h, to give surfaced-processed Cu nanoparticles. Into said colloid containing Cu nanoparticles was added sequentially 15 mL of anhydrous ethanol, 3 mL of ammonia, 1.4 mL of tetraethylorthosilicate under stirring, and the same was reacted for 4h, subjected to centrifugation, washing, drying to give SiO₂@ Cu_{1×10}-₄ powder.

Preparation of Li₂Ca_{0.95}SiO₄:Tb_{0.05}@Cu_{1×10}-₄: 0.5516g of LiNO₃, 0.6232g of Ca(NO₃)₂, 0.0689g of Tb(NO₃)₃ and 0.2404g of SiO₂ of SiO₂@Pd powder were weighed and grinded sufficiently in an agate mortar to give a homogenous mixing, and the powder was then transferred into a corundum crucible, and subjected to thermal processing in a muffle furnace at 600 °C for 4h, and sintered in a tubular furnace at 1000°C in a 95% N₂ + 5%H₂ weak reducing atmosphere for 6h to undergo reduction, cooled to room temperature, to afford Li₂Ca_{0.80}SiO₄:Tb_{0.20}@ Pd_{1×10}-₅ luminescent material.

### Example 6

### Preparation of Li₂Ca_{0.88}SiO₄:Tb_{0.12}@ Ag_{5×10}-₄.

Preparation of the colloid containing the Ag nanoparticle: 0.0429g of AgNO₃, 0.0733g of sodium citrate and 0.05g of PVP were respectively weighed, and formulated into 10 mL of an aqueous solution of AgNO₃ (0.025 mol/L), 10 mL of an aqueous solution of sodium citrate (0.025 mol/L) and 10 mL of an aqueous solution of PVP (5mg/mL). 2 mL of the aqueous solution of AgNO₃ was taken and added into 30 mL of deionized water, and simultaneously added therein 4mL of the aqueous solution of PVP under stirring, and the same was heated to 100°C, followed by dropwisely added therein 4mL of an aqueous solution of sodium citrate, and the same was reacted for further 15 min to give 40mL of a colloid containing Ag nanoparticles (1×10⁻³mol/L).

Preparation of SiO₂@Ag_{5×10}-₄: 5mL of a colloid containing Ag nanoparticles (1×10⁻³mol/L) was weighed. Into a beaker containing the colloid containing Ag nanoparticles was added 6mL of PVP solution (0.06g/mL), and the same was magnetically stirred for 15h, to give surfaced-processed Ag nanoparticles. Into said colloid containing Ag nanoparticles was added sequentially 35 mL of anhydrous ethanol, 8 mL of ammonia, 1.5 mL of tetraethylorthosilicate under stirring, and the same was reacted for 2h, subjected to centrifugation, washing, drying to give SiO₂@Ag_{5×10}-₄ powder.

Preparation of Li₂Ca_{0.88}SiO₄:Tb_{0.12}@Ag_{5×10}-₄: 0.2955g of Li₂CO₃, 0.4506g of CaC₂O₄, 0.1396g of Tb₂(C₂O₄)₃ and 0.2404g of SiO₂ of SiO₂@Pd powder were weighed and grinded sufficiently in an agate mortar to give a homogenous mixing, and the powder was then transferred into a corundum crucible, and subjected to thermal processing in a muffle furnace at 500 °C for 10 h, and sintered in a tubular furnace at 1100°C in a pure H₂ reducing atmosphere for 3h to undergo reduction, cooled to room temperature to afford Li₂Ca_{0.80}SiO₄:Tb_{0.20}@Pd_{1×10}-₅ luminescent material.

### Example 7

### Preparation of Li₂Ca_{0.92}SiO₄:Tb_{0.08}@(Ag_{0.5}/Au_{0.5})_{1.25×10}-₃.

Preparation of the colloid containing the Ag_{0.5}/Au_{0.5} nanoparticle: 6.2mg of chloroauric acid (AuCl₃·HCl·4H₂O) and 2.5mg of AgNO₃ were weighed, and dissolved in 28mL of deionized water. After complete dissolution, 22mg of sodium citrate and 20 mg of PVP were weighed, and dissolved in the above mixed solution under magnetic stirring. 5.7 mg of sodium borohydride was weighed and dissolved in 10mL of deionized water to give 10 mL of an aqueous solution sodium borohydride having a concentration of 1.5×10⁻²mol/L. Under magnetic stirring, into the above mixed solution was added all at once 2 mL of an aqueous solution of sodium borohydride (1.5×10⁻²mol/L), and the same was further reacted for 20 min to afford 30mL of colloid containing Ag/Au nanoparticles having a total metal concentration of 1 ×10⁻³mol/L.

Preparation of SiO₂@(Ag_{0.5}/Au_{0.5})_{1.25×10}-₃: 5mL of a colloid containing Ag_{0.5}/Au_{0.5} nanoparticles (1×10⁻³mol/L) was weighed. Into a beaker containing the colloid containing Ag_{0.5}/Au_{0.5} nanoparticles was added 10mL of PVP solution (0.1g/mL), and the same was magnetically stirred for 12h, to give surfaced-processed Ag_{0.5}/Au_{0.5} nanoparticles. Into said colloid containing Ag_{0.5}/Au_{0.5} nanoparticles was added sequentially 30 mL of anhydrous ethanol, 6 mL of ammonia, 1 mL of tetraethylorthosilicate under stirring, and the same was reacted for 5h, subjected to centrifugation, washing, drying to give SiO₂@(Ag_{0.5}/Au_{0.5})_{1.25×10}-₃ powder.

Preparation of Li₂Ca_{0.92}SiO₄:Tb_{0.08}@(Ag_{0.5}/Au_{0.5})_{1.25×10}-₃: 0.2955g of Li₂CO₃, 0.2016g of CaO, 0.0747g of Tb₄O₇ and 0.2404g of SiO₂@(Ag_{0.5}/Au_{0.5})_{1.25×10}-₃ powder were weighed and grinded sufficiently in an agate mortar to give a homogenous mixing, and the powder was then transferred into a corundum crucible, and subjected to thermal processing in a muffle furnace at 700°C for 8 h, and sintered in a tubular furnace at 900°C in 95%N₂+ 5% H₂ weak reducing atmosphere for 5h to undergo reduction, cooled to room temperature, to afford Li₂Ca_{0.92}SiO₄:Tb_{0.08}@(Ag_{0.5}/Au_{0.5})_{1.25×10}-₃ luminescent material.

Although the preferable embodiments of the present invention has been described and illustrated in detail, it is clearly understood that the same is not to be taken by way of limitation, it should be understood that various changes, substitutions, and alterations could be made hereto by an ordinary skilled person in the art without departing from the spirit and scope of the invention as defined by the appended claims.

## Claims

1. A metal nanoparticle-coating silicate luminescent material, **characterized in that**, having the molecular formula of: Li₂Ca₁₋ₓSiO₄:Tbₓ@M_{y};
where @ represents a coating, M is at least one among Ag, Au, Pt, Pd, and Cu nanoparticles, 0<x≤0.2, y is the molar ratio of M and Si, 0<y≤1×10⁻².

2. A method of preparing a metal nanoparticle-coating silicate luminescent material, **characterized in that** comprising the steps of:
preparing a colloid containing a metal nanoparticle, said metal is at least one among Ag, Au, Pt, Pd, and Cu;
surface processing said colloid containing a metal nanoparticle, then adding anhydrous ethanol, deionized water and ammonia, when mixed evenly and while stirring, adding tetraethylorthosilicate on the basis of the molar ratio, y, of the metal nanoparticle and Si, when reacted acquiring by separation of the metal nanoparticle-coating SiO₂, where 0 < y≤1×10⁻²;
weighing, on the basis of the stoichiometric ratio, of the compounds corresponding to Li, Ca and Tb, and of the metal nanoparticle-coating SiO₂, thermal processing when mixed evenly, and subjecting the same to thermal reduction in a reducing atmosphere, acquiring Li₂Ca₁₋ₓSiO₄:Tbₓ@M_{y} when cooled; where @ represents a coating, M is at least one among Ag, Au, Pt, Pd, and Cu nanoparticles, 0 < x≤0.2.

3. A method of preparing a metal nanoparticle-coating silicate luminescent material according to claim 2, **characterized in that**, said step of preparing a colloid containing a metal nanoparticle comprises mixing a solution of a metal salt, an auxiliary agent and a reducing agent for a reaction time of 10 min to 45 min, and affording a colloid containing a metal nanoparticle after the reaction, said metal is at least one among Ag, Au, Pt, Pd, and Cu.

4. A method of preparing a metal nanoparticle-coating silicate luminescent material according to claim 3, **characterized in that**, the concentration of said solution of a metal salt is 1×10⁻³mol/L to 5×10⁻²mol/L;
said auxiliary agent is at least one among polyvinyl pyrrolidone, sodium citrate, cetyl trimethyl ammonium bromide, sodium lauryl sulfate and sodium dodecyl sulfate;
said auxiliary agent is present in said colloid containing a metal nanoparticle in an amount of 1×10⁻⁴g/mL to 5×10⁻² g/mL;
said reducing agent is at least one among hydrazine hydrate, ascorbic acid, sodium citrate and sodium borohydride;
the molar ratio of said reducing agent and the metal ion in said solution of a metal salt is 3.6: 1 to 18: 1.

5. A method of preparing a metal nanoparticle-coating silicate luminescent material according to claim 2, **characterized in that**, said step of surface processing said colloid containing a metal nanoparticle comprises adding said colloid containing a metal nanoparticle into a solution of polyvinylpyrrolidone while being stirred for 8h to 18h.

6. A method of preparing a metal nanoparticle-coating silicate luminescent material according to claim 5, **characterized in that**, the concentration of said solution of polyvinylpyrrolidone is 0.005g/mL to 0.1g/mL.

7. A method of preparing a metal nanoparticle-coating silicate luminescent material according to claim 2, **characterized in that**, said water, anhydrous ethanol, ammonia and tetraethylorthosilicate are mixed by volume fraction of 10∼20: 15∼50: 1∼7: 0.5∼3.

8. A method of preparing a metal nanoparticle-coating silicate luminescent material according to claim 2, **characterized in that**, said compounds corresponding to Li, Ca and Tb are oxides, carbonates, acetates or oxalates corresponding to Li, Ca and Tb.

9. A method of preparing a metal nanoparticle-coating silicate luminescent material according to claim 2, **characterized in that**, said thermal processing comprise calcining at 500 °C to 1000 °C for 2h to 5h.

10. A method of preparing a metal nanoparticle-coating silicate luminescent material according to claim 2, **characterized in that**, said step of subjecting to thermal reduction in a reducing atmosphere comprises conducting reduction in a reducing atmosphere at 800 °C to 1200 °C for 0.5h to 6h;
said reducing atmosphere is at least one among N₂ and H₂ reducing atmosphere, carbon powder reducing atmosphere, CO reducing atmosphere and pure H₂ reducing atmosphere.
